# EUROPEAN PATENT APPLICATION

(11) **EP 4 760 846 A1**
(43) Date of publication of application: **17.06.2026**
(21) Application number: 25221438.2
(22) Date of filing: 08.12.2025
(51) Int. Cl.: H01M 10/0525, H01M 10/44, H01M 10/52, H01M 50/30

(54) **APPARATUS, METHOD, AND SYSTEM FOR REMOVING LITHIUM-ION BATTERY GAS**

(30) Priority: 10.12.2024 KR 20240183083
(71) Applicant: SAMSUNG SDI CO., LTD., Yongin-si, Gyeonggi-do 17084 (KR)
(72) Inventor: Kim, Kyoungho, 17084 Yongin-si, Gyeonggi-do (KR); Ko, Eunjoo, 17084 Yongin-si, Gyeonggi-do (KR); Choi, Huiju, 17084 Yongin-si, Gyeonggi-do (KR); Song, Inje, 17084 Yongin-si, Gyeonggi-do (KR)
(74) Representative: Meissner Bolte Partnerschaft mbB

(57) **Abstract**

Disclosed herein is an apparatus (100) for removing lithium-ion battery gas, which is used to remove gas generated during an activation process of a lithium-ion battery (200). The apparatus (100) includes an ultrasonic vibration unit (110) configured to apply ultrasonic waves to the lithium-ion battery (200) to remove gas within the battery, and a control unit (130) configured to control an operation of the ultrasonic vibration unit (110).

## Description

### CROSS-REFERENCE TO RELATED APPLICATIONS

This present application claims priority to and the benefit under 35 U.S.C. § 119(a)-(d) of Korean Patent Application No. 10-2024-0183083, filed on December 10, 2024, in the Korean Intellectual Property Office, the entire invention of which is incorporated herein by reference.

### FIELD

The present invention relates to an apparatus, method, and system for removing lithium-ion battery gas, and more particularly, to an apparatus, method, and system for removing lithium-ion battery gas, which enable simplification of facility structure, time saving, reduced side reactions, and extended battery life by removing gas using ultrasonic waves.

### 2. Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly consisting of a positive electrode and a negative electrode, a case that accommodates the electrode assembly, a terminal part connected to the electrode assembly, etc.

Lithium-ion batteries are charged and discharged through the migration and storage of lithium ions between positive and negative electrodes. However, due to side reactions with electrolytes at the positive/negative electrodes, the lithium-ion batteries may continuously generate gas and increase in surface resistance. To solve these issues, a safe solid electrolyte interphase (SEI) layer is formed on the surface of positive/negative electrode materials by adding additives to the electrolytes of the lithium-ion batteries in an activation process. During this activation process, a large amount of gas is inevitably generated due to the reaction of additives. The generated gas may be adsorbed onto electrode plates or trapped between respective electrode plates, resulting in phenomena that hinder the migration of lithium ions. Hence, a method of removing, from inside cells, gas generated during an activation process is essential and increasingly required as the cells become larger in area.

Typically, examples of conventional methods proposed to remove gas include a method of leaving lithium-ion batteries at room temperature for degassing therein, a method of removing gas by vacuuming the inside of each cell with a vacuum pump, etc. These methods may, however, increase facilities in size, cost, etc., and take a long time.

The herein information disclosed in this Background section is for enhancement of understanding of the background of the present invention, and therefore, it may contain information that does not constitute related (or prior) art.

### SUMMARY

The present invention provides an apparatus, method, and system for removing lithium-ion battery gas, which enable simplification of facility structure, time saving, reduced side reactions, and extended battery life by removing gas using ultrasonic waves.

However, the technical problem to be solved by the present invention is not limited to the problems described herein, and other problems not mentioned herein, and aspects and features of the present invention that would address such problems, will be clearly understood by those skilled in the art from the description of the present invention herein. The present invention provides an apparatus for removing lithium-ion battery gas, which is used to remove gas generated during an activation process of a lithium-ion battery. The apparatus includes an ultrasonic vibration unit configured to apply ultrasonic waves to the lithium-ion battery to remove gas within the battery, and a control unit configured to control an operation of the ultrasonic vibration unit.

The ultrasonic vibration unit may be installed on at least one of an underside and a side of the lithium-ion battery to transmit ultrasonic vibrations through an electrolyte of the lithium-ion battery.

The ultrasonic vibration unit may have a frequency range of 20 kHz to 20 MHz and an oscillation output set between 50 W and 1800 W to provide vibration energy required for removing gas generated during the activation process.

The apparatus may further include a tray structure placed between the lithium-ion battery and the ultrasonic vibration unit located therebeneath, and the tray structure may support the underside of the lithium-ion battery and transmit ultrasonic waves to remove gas within the lithium-ion battery. The tray structure may support a plurality of lithium-ion batteries simultaneously and transmit ultrasonic waves to the plurality of lithium-ion batteries to remove gas simultaneously.

The ultrasonic vibration unit may be placed on the side of the lithium-ion battery and apply ultrasonic waves to 80% of the area of the side to remove gas trapped on the side of the battery during the activation process.

The control unit may control the operation of the ultrasonic vibration unit to function to remove gas generated inside the lithium-ion battery.

The present invention provides a method of removing lithium-ion battery gas, which is used to remove gas generated during an activation process of a lithium-ion battery. The method includes applying ultrasonic waves to the lithium-ion battery to remove gas within the battery by an ultrasonic vibration unit, and controlling an operation of the ultrasonic vibration unit by a control unit.

The applying ultrasonic waves to the lithium-ion battery may include transmitting ultrasonic vibrations through an electrolyte of the lithium-ion battery by the ultrasonic vibration unit installed on at least one of the underside and side of the lithium-ion battery.

The applying ultrasonic waves to the lithium-ion battery may include providing vibration energy required for removing gas generated during the activation process at a frequency range of 20 kHz to 20 MHz and an oscillation output set between 50 W and 1800 W.

The method may further include placing a tray structure between the lithium-ion battery and the ultrasonic vibration unit located therebeneath, and in the placing a tray structure, the tray structure may support the underside of the lithium-ion battery to transmit ultrasonic waves.

In the placing a tray structure, the tray structure may support a plurality of lithium-ion batteries simultaneously and transmit ultrasonic waves to the plurality of lithium-ion batteries to remove gas simultaneously.

The applying ultrasonic waves to the lithium-ion battery may include removing gas trapped on the side of the battery during the activation process by the ultrasonic vibration unit placed on the side of the lithium-ion battery and configured to apply ultrasonic waves to 80% of the area of the side.

The controlling an operation of the ultrasonic vibration unit may include optimizing the gas removal by adjusting a frequency, output, and operating time of the ultrasonic vibration unit, and controlling the ultrasonic vibration unit that monitors a concentration of gas within the lithium-ion battery in real time by a gas sensor unit and either activates or stops the operation of the ultrasonic vibration unit when the concentration of gas is equal to or greater than a specific threshold.

The present invention provides a system for removing lithium-ion battery gas, which is used to remove gas generated during an activation process of a lithium-ion battery and improve performance of the battery. The system includes an ultrasonic vibration unit configured to apply ultrasonic waves into the lithium-ion battery for removal of gas, a control unit configured to control an operation of the ultrasonic vibration unit, and a gas sensor unit configured to monitor gas concentration data within the lithium-ion battery in real time.

The ultrasonic vibration unit may be installed on at least one of the underside and side of the lithium-ion battery to transmit ultrasonic waves for the gas removal.

The control unit may optimize the gas removal by adjusting a frequency, output, and operating time of the ultrasonic vibration unit based on the gas concentration data received from the gas sensor unit.

The gas sensor unit may measure a concentration of gas within the lithium-ion battery in real time, and send a signal to the control unit to activate the ultrasonic vibration unit when the concentration of gas is equal to or greater than a specific threshold.

The system may transmit ultrasonic waves simultaneously to a plurality of lithium-ion batteries to remove gas generated inside the individual batteries.

The ultrasonic vibration unit may provide vibration energy at an ultrasonic oscillation output set between 50 W and 1800 W.

### BRIEF DESCRIPTION OF THE DRAWINGS

The following accompanying drawings illustrate preferred embodiments of the present invention, and serve to further describe aspects and features of the present invention together with the detailed description of the present invention. Thus, the present invention should not be construed as being limited to the drawings, in which:
FIG. 1A is a top perspective view of a prismatic secondary battery;
FIG. 1B is a cross-sectional view taken along line I-I' of FIG. 1A;
FIG. 2 is a graph illustrating a change in state of charge (SOC) and a time when an ultrasonic process for gas removal is applied, during an activation process of a lithium-ion battery;
FIG. 3 is a view illustrating an apparatus for removing lithium-ion battery gas 100 according to embodiments of the present invention;
FIG. 4 is a view for explaining an ultrasonic vibration unit 110 according to embodiments of the present invention;
FIG. 5A is a perspective view illustrating a state in which a plurality of lithium-ion batteries are arranged on a tray structure 120 including the ultrasonic vibration unit 110 at the bottom thereof for simultaneous removal of gas according to embodiments of the present invention;
FIG. 5B is a schematic view for explaining step-by-step a process of removing gas within each lithium-ion battery from the bottom thereof through the ultrasonic vibration unit 110 according to embodiments of the present invention;
FIG. 6A is a perspective view illustrating a state in which lithium-ion batteries are arranged on a multilayered tray structure 120 for removal of gas through the ultrasonic vibration unit 110 from each layer according to embodiments of the present invention;
FIG. 6B is a schematic view for explaining step-by-step a process of removing gas within each lithium-ion battery from the side thereof using the ultrasonic vibration unit 110 according to embodiments of the present invention; and
FIG. 7 is a flowchart for explaining a method of removing lithium-ion battery gas according to embodiments of the present invention.

### DETAILED DESCRIPTION

Exemplary embodiments of the present invention will be described herein in detail with reference to the accompanying drawings. Prior to the description, it is noted that the terms or words used in this specification and claims should not be construed as being limited to common or dictionary meanings but instead should be understood to have meanings and concepts in agreement with the spirit of the present invention based on the principle that an inventor can define the concept of each term suitably in order to describe his/her own invention in the best way possible. Accordingly, since embodiments described in this specification and the configurations illustrated in the drawings are only an example of the present invention and they do not cover all the technical ideas of the present invention, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present invention, the accompanying drawings are not drawn to scale and the dimensions of some components may be exaggerated. It should be noted that the same reference numerals are designated to the same components in different embodiments. Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween. As used herein, the term "and/or" includes any and all combinations of one or more of the associate listed items. The use of "may" when describing embodiments of the present invention relates to "one or more embodiments of the present invention". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art. It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed herein may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions. The terminology used herein is for the purpose of describing embodiments of the present invention and is not intended to limit the present invention.

The present invention will be described in detail with reference to the attached drawings.

Examples of secondary batteries include a coin type, a cylindrical type, a prismatic type, and a pouch type. The present invention is basically applicable to a prismatic secondary battery. Therefore, the prismatic secondary battery will first be briefly described prior to description of embodiments of the present invention.

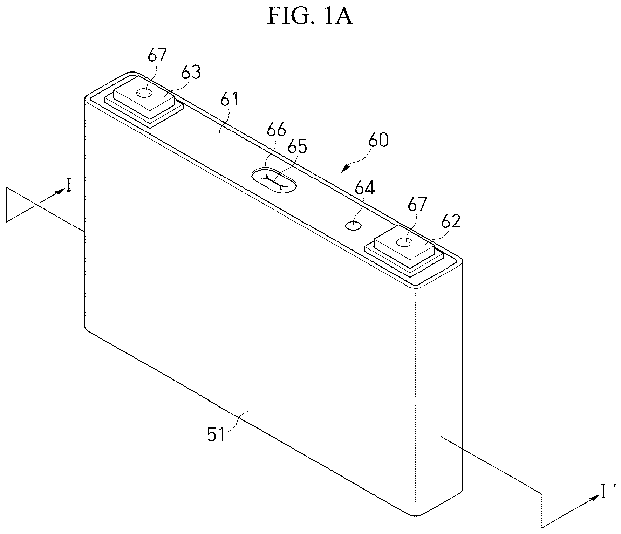

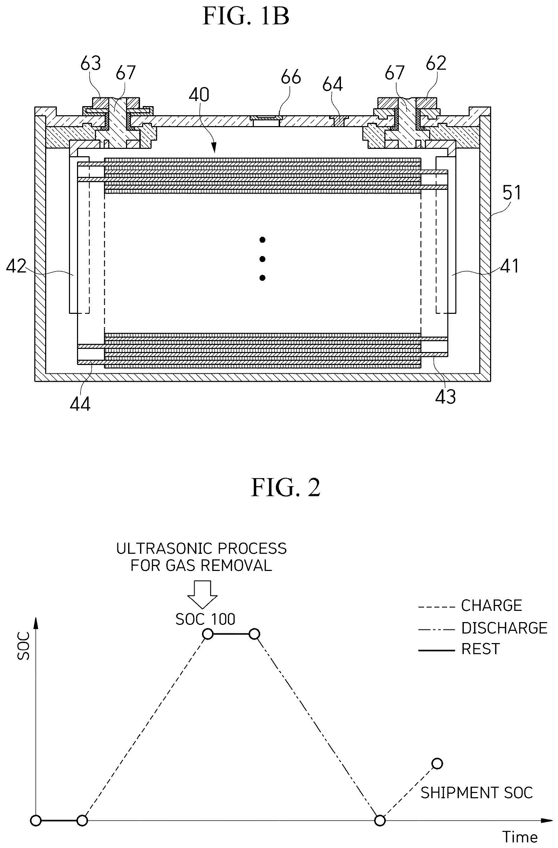

FIG. 1A is a top perspective view of the prismatic secondary battery. FIG. 1B is a cross-sectional view taken along line I-I' of FIG. 1A.

First, the external appearance of the prismatic secondary battery illustrated in FIG. 1A will be described.

A casing 51 defines an overall appearance of the prismatic secondary battery, and may be made of conductive metal, such as aluminum, aluminum alloy, or nickel-plated steel. In addition, the casing 51 may provide a space for accommodating an electrode assembly therein.

A cap assembly 60 may include a cap plate 61 that covers the opening of the casing 51, and the cap assembly 60 and the cap plate 61 may be made of a conductive material. Here, a first terminal 63 and a second terminal 62 may be electrically connected to respective positive and negative (or negative and positive) electrodes inside the casing, and may be installed to protrude outward through the cap plate 61.

The cap plate 61 may be equipped with an electrolyte injection port 64 formed to install a sealing plug, and a vent 66 formed with a notch 65. The vent 66 is for degassing the secondary battery, i.e., for discharging gas generated inside the secondary battery.

With reference to FIG. 1B, the internal structure of the prismatic secondary battery and the coupling structure with the cap assembly 60 will be described.

As illustrated in FIG. 1B, the prismatic secondary battery may basically include an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing. The electrode assembly 40 may be of a stack type rather than a winding type, but the shape of the electrode assembly 40 is not limited in the present invention. In addition, the electrode assembly 40 may be a Z-stack electrode assembly in which a first electrode plate and a second electrode plate are inserted into both sides of a separator bent into a Z-stack. Furthermore, the electrode assembly 40 may consist of one or more electrode assemblies, which are stacked such that their long sides are adjacent to each other and accommodated in the casing, and the number of electrode assemblies is not limited in the present invention. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of metal foil, such as copper, copper alloy, nickel, or nickel alloy. The first electrode plate may include a first electrode tab (or first uncoated part) 43, which is a region without application of the first electrode active material. The first electrode tab 43 may act as a current flow passage between the first electrode plate and the first current collector part 41. In some examples, the first electrode tab 43 may be formed by cutting the first electrode plate to protrude to one side in advance when manufacturing the first electrode plate, and may protrude further to one side than the separator without separate cutting.

The second electrode plate may be formed by applying a second electrode active material such as transition metal oxide to a substrate made of metal foil, such as aluminum or aluminum alloy. The second electrode plate may include a second electrode tab (or second uncoated part) 44, which is a region without application of the second electrode active material. The second electrode tab 44 may act as a current flow passage between the second electrode plate and the second current collector part 42. In some examples, the second electrode tab 44 may be formed by cutting the second electrode plate to protrude to the other side in advance when manufacturing the second electrode plate, and may protrude further to the other side than the separator without separate cutting.

In some embodiments, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side of the electrode assembly 40 in the same direction. Here, the left and the right are represented based on the secondary battery illustrated in FIG. 1 for convenience of explanation, and they may change in position when the secondary battery is rotated left and right or up and down.

The separator functions to prevent a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described herein, respectively. In some embodiments, the electrode assembly 40 may be accommodated together with an electrolyte in the casing 51.

In the electrode assembly 40, the first current collector part 41 and the second current collector part 42 may be welded and connected to the first electrode tab 43 extending from the first electrode plate and the second electrode tab 44 extending from the second electrode plate, respectively. The first current collector part 41 and the second current collector part 42 are connected to the first terminal 62 and the second terminal 63, as described with reference to FIG. 1A, through terminal pins 67, respectively. In some embodiments, the terminal pins 67 may each have an outer peripheral surface that is threaded, and may be fastened to the first terminal 62 and the second terminal 63 by screwing. However, the present invention is not limited thereto. For example, the terminal pins 67 may also be coupled to the first terminal 62 and the second terminal 63 by riveting or welding.

FIG. 2 is a graph illustrating a change in state of charge (SOC) and a time when an ultrasonic process for gas removal is applied, during an activation process of a lithium-ion battery.

FIG. 2 is a graph illustrating the time when the gas removal process of the present invention is applied and the change in state of charge (SOC) over time, during the activation process of the lithium-ion battery. The present invention aims to improve the performance and life of the battery by removing the gas generated inside the battery using ultrasonic waves at a specific point of time during the activation process of the battery.

In the graph, the vertical axis represents state of charge (SOC) and the horizontal axis represents time. The SOC refers to a state of charge of the battery. The higher the SOC, the more energy the battery has. In FIG. 2, the red line represents a level of charge of the battery, the blue line represents a discharge process, and the black line represents a section in which the battery is at rest.

The activation process begins with initial charging. After the battery is charged to a certain SOC, the state of charge reaches an SOC of 100, in which time the ultrasonic process for gas removal proposed in the present invention is applied. The ultrasonic process effectively removes the gas generated inside the battery to prevent a degradation in performance of the battery due to the gas generated during activation. Performing gas removal using ultrasonic waves at the SOC of 100 allows the gas adsorbed on the surface of an electrode to be removed, thereby maximizing the efficiency of the battery by maintaining the reactivity of the electrode and lowering the internal resistance of the battery.

The battery then enters the discharge process so that the SOC gradually decreases. As can be seen in FIG. 2, in order to minimize the generation of gas during the discharge process, discharging is performed under certain conditions and the voltage and temperature of the battery are managed to remain stable. After the discharging is completed, the battery enters a state of rest at the final SOC, in which time the battery may be recharged to a certain level of SOC to run a test for checking the performance of the battery. The gas removal process of the present invention as illustrated in FIG. 2 is a technology that is able to solve accumulation of gas due to side reactions that may occur during the charge and discharge process of the battery and to effectively reduce performance degradation and thermal hazards that may be caused by the accumulation of gas within the battery. The process of gas removal using ultrasonic waves plays an important role in maintaining the active area of the electrode to extend the cycle life of the battery and improving electrochemical characteristics during charging and discharging.

The process of gas removal using ultrasonic waves of the present invention can increase the charge efficiency of the battery and reduce a drop in voltage during discharging, thereby stably maintaining battery performance. In addition, it is possible to lower the internal resistance of the battery to improve its high-power characteristics and to enhance safety when using the battery through the gas removal process.

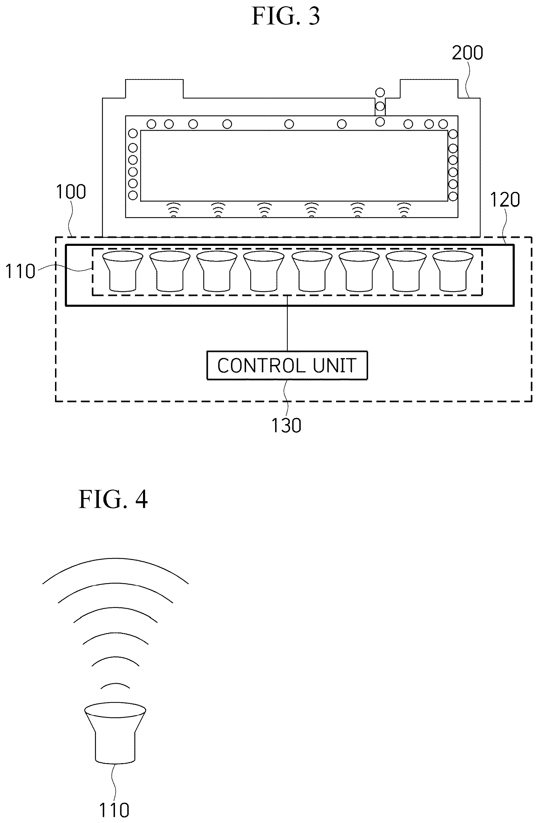

FIG. 3 is a view illustrating an apparatus for removing lithium-ion battery gas 100 according to embodiments of the present invention.

FIG. 3 is a cross-sectional view illustrating the apparatus that is used to remove gas generated during an activation process of a lithium-ion battery according to the present invention. The apparatus for removing lithium-ion battery gas according to the present invention is made up of components for removing the gas generated inside the lithium-ion battery to improve the performance and life of the battery. The apparatus 100 includes an ultrasonic vibration unit 110, a control unit 130, and a battery-supporting tray structure 120. Here, the ultrasonic vibration unit 110 may include one or more ultrasonic vibrators.

The lithium-ion battery, which is designated by reference numeral 200, includes a positive electrode, a negative electrode, an electrolyte, and a cell casing. As illustrated in FIG. 3, the ultrasonic vibration unit 110 is installed beneath the battery. The ultrasonic vibration unit 110 is placed on the underside and side of the lithium-ion battery and transmits ultrasonic waves into the battery to effectively remove the gas adsorbed on the surface of the electrode. The ultrasonic vibration unit 110 has a frequency range of 20 kHz to 20 MHz. The ultrasonic vibration unit 110 has an oscillation output set between 50 W and 1800 W to provide sufficient vibration energy, making it suitable for removing the gas within the battery.

The ultrasonic vibration unit 110 is installed on the underside and side of the battery to remove the gas generated inside and on the side of the battery by applying ultrasonic waves thereto. In particular, ultrasonic waves are transmitted through the electrolyte of the battery, so that the gas generated on the electrode surface can be effectively removed by transmission of vibration via the electrolyte. This allows the battery to maintain its internal reactivity and reduce its internal resistance, thereby achieving optimized battery performance.

The apparatus for removing lithium-ion battery gas 100 of the present invention includes a tray structure 120 placed between the lithium-ion battery and the ultrasonic vibration unit 110 therebeneath. The tray structure serves to support the underside of the lithium-ion battery and is designed to have a size enough to support multiple batteries simultaneously. The tray structure as illustrated in FIG. 3 may have a size of about 1440 mm × 1750 mm or more, and support 100 or more lithium-ion batteries simultaneously. This enables the simultaneous transmission of ultrasonic waves to a large number of batteries for gas removal, thereby increasing productivity.

The control unit 130 of the present invention functions to control the operation of the ultrasonic vibration unit 110. The control unit 130 optimizes gas removal by adjusting the frequency, output, and operating time of the ultrasonic vibration unit 110. In addition, the control unit 130 monitors a concentration of gas within the lithium-ion battery in real time through a gas sensor unit, and automatically activates or stops the operation of the ultrasonic vibration unit 110 when the concentration of gas is equal to or greater than a specific threshold, thereby removing gas quickly and efficiently. This allows the concentration of gas within the battery to be kept constant, ensuring the stability of the battery.

As illustrated in FIG. 3, the ultrasonic vibration unit 110 is placed on the underside and side of the lithium-ion battery and plays an important role in the process of removing the gas generated inside the battery. The ultrasonic vibration unit 110 transmits ultrasonic waves through the electrolyte of the battery from the bottom thereof to remove gas on the electrode surface, and also applies ultrasonic waves from the side of the battery to remove gas on the side thereof. This multilateral application of ultrasonic waves maximizes the efficiency of gas removal by removing the gas trapped both inside and on the side of the battery.

In addition, the gas sensor unit measures the concentration of gas within the lithium-ion battery in real time, and sends a signal to the control unit 130 when the concentration of gas is equal to or greater than a specific threshold so as to activate the ultrasonic vibration unit 110. This allows the accumulation of gas during the activation process of the battery to be prevented, and the gas removal process allows a deterioration in performance of the battery to be prevented. In particular, the process of gas removal using ultrasonic waves of the present invention contributes to improving the charge/discharge performance of the battery and extending the cycle life of the battery by maintaining the active area of the electrode surface and reducing the internal resistance of the battery.

A system for removing lithium-ion battery gas according to the present invention is effective in preventing a degradation in performance of a battery and ensuring stability thereof by removing gas during the activation process of the battery. The configuration described with reference to FIG. 3 is designed to minimize side reactions that may occur during the activation process of the battery and to stably maintain the charge/discharge characteristics of the battery. As such, the system for removing lithium-ion battery gas according to the present invention can be utilized as an important technical means for improving performance of the battery and enhancing safety thereof.

FIG. 4 is a view for explaining the ultrasonic vibration unit 110 according to embodiments of the present invention.

FIG. 4 is a view schematically illustrating the ultrasonic vibration unit 110 used in the present invention. The ultrasonic vibration unit 110, which plays an important role in the system for removing lithium-ion battery gas of the present invention, is a key device that applies ultrasonic energy into the lithium-ion battery to effectively remove the gas generated during the activation process.

The ultrasonic vibration unit 110 functions to remove the gas adsorbed on the electrode by transmitting ultrasonic waves through the electrolyte within the battery in the system for removing lithium-ion battery gas of the present invention. The ultrasonic vibration unit 110 has a frequency range of 20 kHz to 20 MHz and an oscillation output set between 50 W and 1800 W. These frequency and output ranges provide sufficient energy to effectively remove the gas generated inside the battery.

As illustrated in FIG. 4, the ultrasonic vibration unit 110 serves to transmit ultrasonic energy to the battery, thereby removing the gas within the battery. Ultrasonic waves are transmitted through the electrolyte within the battery, in which process they help to separate the gas present on the electrode surface to discharge the gas out of the battery. Ultrasonic energy serves to create physical vibrations at the interface between the electrolyte and the electrode to separate and move gas bubbles. As a result, it is possible to efficiently remove the gas generated inside the battery and to prevent a deterioration in performance of the battery. The ultrasonic vibration unit 110 of the present invention is placed on the underside and side of the lithium-ion battery for application of ultrasonic waves. The ultrasonic vibration unit 110 installed on the underside of the battery is coupled to the tray structure that supports the battery to evenly transmit ultrasonic waves across the battery, and the ultrasonic vibration unit 110 installed on the side of the battery is effective in removing the gas generated from the side of the battery. As a result, it is possible to remove the whole amount of gas trapped not only inside but also on the side of the battery to increase the stability and performance of the battery.

The vibrations provided by the ultrasonic vibration unit 110 are effective in physically removing the gas adsorbed on the electrode surface via the electrolyte within the battery. The high-frequency vibrations created by ultrasonic waves generate gas bubbles within the electrolyte, which release the gas adsorbed on the electrode surface while expanding and bursting. This process helps to quickly discharge the gas within the battery and reduces the internal resistance of the battery to improve the charge/discharge efficiency of the battery.

In addition, in the present invention, the operation of the ultrasonic vibration unit 110 is controlled by the control unit 130 combined therewith. The control unit 130 monitors the concentration of gas within the battery in real time and activates the ultrasonic vibration unit 110 when the concentration of gas is equal to or greater than a specific threshold. This allows the ultrasonic vibration unit 110 to operate only when needed, saving energy and helping to effectively remove the gas within the battery. Based on the data of gas concentration received from the gas sensor unit, the control unit 130 adjusts the frequency and output of the ultrasonic vibration unit to optimize the efficiency of gas removal.

The method of operation of the ultrasonic vibration unit 110 described with reference to FIG. 4 plays an important role in maintaining the performance of the battery and preventing a deterioration thereof in the system for removing lithium-ion battery gas of the present invention. In particular, it is possible to maintain the active area of the electrode surface and reduce the internal resistance of the battery by removing the gas generated due to side reactions that occur during the activation process of the battery, thereby significantly improving the long-term performance and stability of the battery.

As such, since the ultrasonic vibration unit 110 as illustrated in FIG. 4 is a key component of the system for removing lithium-ion battery gas of the present invention, it can be utilized as an important technical means for effectively removing the gas within the battery and ensuring the safety and performance of the battery.

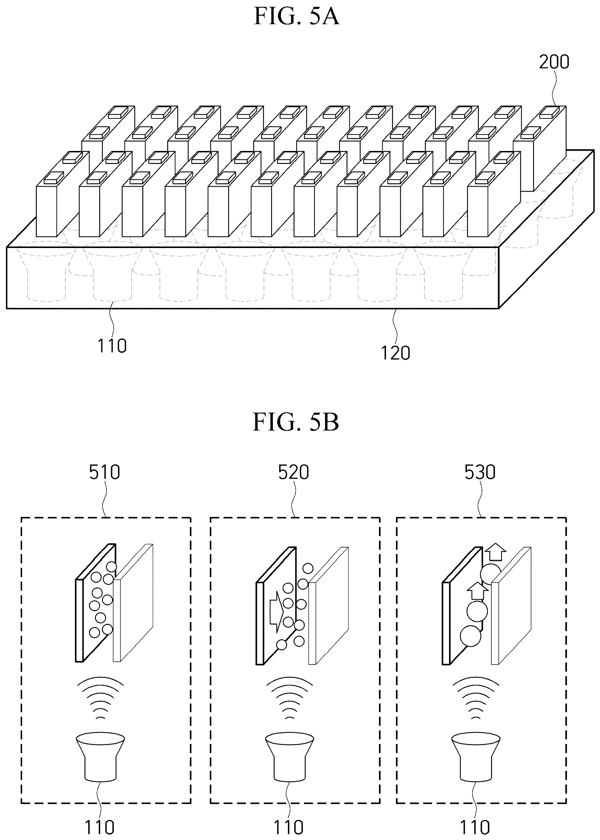

FIG. 5A is a perspective view illustrating a state in which a plurality of lithium-ion batteries are arranged on the tray structure 120 including the ultrasonic vibration unit 110 at the bottom thereof for simultaneous removal of gas according to embodiments of the present invention.

FIG. 5B is a schematic view for explaining step-by-step a process of removing gas within each lithium-ion battery from the bottom thereof through the ultrasonic vibration unit 110 according to embodiments of the present invention.

FIGS. 5A and 5B illustrate a method and process of simultaneously processing a plurality of lithium-ion batteries to remove the gas generated during the activation process of the batteries in the present invention. These drawings illustrate the configuration and operation of the ultrasonic vibration unit 110, the tray structure 120, and individual lithium-ion batteries 200, and show how the system for removing lithium-ion battery gas of the present invention may be applied to a large number of batteries.

FIG. 5A is a perspective view illustrating the configuration of the system for removing lithium-ion battery gas together with the plurality of lithium-ion batteries. Here, the plurality of lithium-ion batteries 200 are arranged on the tray structure 120, and the multiple ultrasonic vibrators of the ultrasonic vibration unit 110 are installed at the bottom of the tray structure. This arrangement provides an efficient gas removal environment that is capable of processing a plurality of batteries simultaneously.

The ultrasonic vibration unit 110 is placed at the bottom of the tray structure 120 to transmit ultrasonic waves to the lithium-ion batteries 200 thereabove. The tray structure 120 serves to fix and stably support the batteries, and is designed to uniformly transmit ultrasonic energy to each individual battery. As a result, it is possible to effectively remove the gas generated during the activation process of the battery to prevent a deterioration in performance of the battery and to reduce the internal resistance of the battery to increase the efficiency of the battery.

In particular, the present invention maximizes productivity by processing the plurality of lithium-ion batteries with ultrasonic waves at once. The tray structure 120 is designed to have a size of about 1440 mm × 1750 mm or more and may support up to 100 or more lithium-ion batteries simultaneously. This allows manufacturing processes to be significantly improved in efficiency by removing the large amount of gas generated during the activation process at once. FIG. 5B is a schematic view for explaining step-by-step a process of removing gas within each lithium-ion battery using the ultrasonic vibration unit 110. The drawing shows steps 510, 520, and 530 and illustrates how the gas within the battery is removed using ultrasonic vibrations.

Step 510 is a first step that represents a state in which the gas generated during the activation process of the lithium-ion battery is accumulated inside the battery. On the electrode surface, gas is generated in the form of bubbles, which cause interference with electrode reactions and an increase in internal resistance of the battery. The ultrasonic vibration unit 110 is ready to transmit vibration energy to the battery.

Step 520 is a second step that represents a process in which the ultrasonic vibration unit 110 applies ultrasonic waves to vibrate gas bubbles that exist between the electrode surface and the electrolyte, allowing the gas bubbles to separate. Ultrasonic energy creates vibrations within the electrolyte, causing gas bubbles to expand and contract to fall away from the electrode surface. This process allows gas to separate from the interface with the electrode, which contributes to effectively removing the gas within the battery.

Step 530 is a third step that represents a process in which the gas bubbles are moved through the electrolyte by ultrasonic vibrations and discharged out of the battery. The energy of ultrasonic vibrations helps to move the gas bubbles upwards and discharge them out of the battery. In this step, the removal of gas is completed, and the inside of the battery remains stable without any increase in its resistance due to accumulation of gas.

This process of gas removal using ultrasonic waves is very effective in improving battery performance. By removing the gas within the battery through ultrasonic vibrations, the active area of the electrode surface is maintained and the internal resistance of the battery is reduced to improve the charge/discharge efficiency thereof. It also contributes to minimizing side reactions that may occur during the activation process of the battery and to extending the life of the battery. The process in FIG. 5B illustrates an effective method of application of the system for removing lithium-ion battery gas according to the present invention, and visually shows specific steps of the method of removing the gas within the battery using ultrasonic vibrations.

This ultrasonic method for gas removal plays an important role in increasing the stability and reliability of the battery, and it can greatly increase the efficiency of the manufacturing process by simultaneously processing a large number of lithium-ion batteries. FIGS. 5A and 5B clearly show the structure and principle of operation of the system for removing lithium-ion battery gas of the present invention when it is applied to a large number of lithium-ion batteries, which makes it easier to understand specific contents for implementing the present invention.

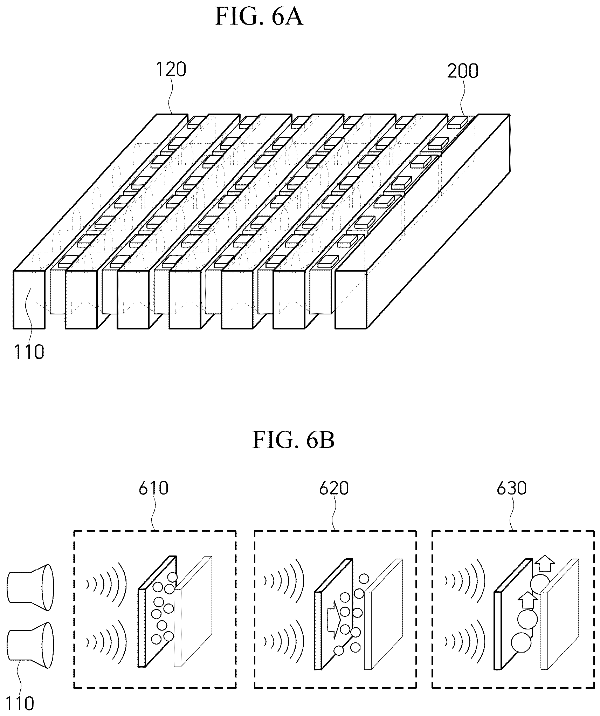

FIG. 6A is a perspective view illustrating a state in which lithium-ion batteries are arranged on a multilayered tray structure 120 for removal of gas through the ultrasonic vibration unit 110 from each layer according to embodiments of the present invention.

FIG. 6B is a schematic view for explaining step-by-step a process of removing gas within each lithium-ion battery from the side thereof using the ultrasonic vibration unit 110 according to embodiments of the present invention.

FIGS. 6A and 6B are views illustrating the detailed configuration of the system for removing lithium-ion battery gas of the present invention, and illustrate step by step the structure for processing the plurality of lithium-ion batteries 200 and the process of gas removal using the ultrasonic vibration unit 110. These drawings illustrate how the system for removing lithium-ion battery gas of the present invention is applicable to a large number of batteries and show how the ultrasonic vibration unit 110 operates in the gas removal process.

FIG. 6A illustrates the system for removing lithium-ion battery gas, which is for simultaneously processing the plurality of lithium-ion batteries 200 through the multilayered tray structure 120 according to the present invention. In the present invention, the multilayered tray structure is provided to process the plurality of batteries simultaneously, and the ultrasonic vibrators of the ultrasonic vibration unit 110 are arranged in the respective layers. This allows ultrasonic waves to be effectively transmitted to each individual battery to remove the gas generated in all of the batteries.

The multilayered tray structure 120 serves to fix and stably support the batteries 200, and the ultrasonic vibration unit 110 is placed on the bottom and side of the tray to transmit ultrasonic waves into the batteries. Ultrasonic waves are transmitted through the electrolyte, thereby separating and discharging the gas generated on the electrode surface. In particular, the multilayered tray structure can provide efficiency to process a large number of batteries at once, thereby maximizing the productivity of the manufacturing process. This multilayered structure helps to prevent a degradation in battery performance by removing the gas generated during the activation process of the batteries and to maintain stable charge/discharge characteristics.

FIG. 6B is a schematic view for explaining step-by-step a process of removing gas within each lithium-ion battery using the ultrasonic vibration unit 110. The drawing shows the specific mechanism of the process of removing gas by ultrasonic vibrations through steps 610, 620, and 630.

Step 610 is a first step that represents a state in which the gas generated during the activation process of the lithium-ion battery is accumulated inside the battery. Gas is generated on the electrode surface in the form of bubbles, which cause interference with electrode reactions and an increase in internal resistance of the battery. In this step, the ultrasonic vibration unit 110 is ready to generate ultrasonic waves.

Step 620 is a second step that represents a process in which the ultrasonic vibration unit 110 applies ultrasonic waves to vibrate gas bubbles formed between the electrode surface and the electrolyte, allowing the gas bubbles to separate. Ultrasonic energy causes the gas bubbles within the electrolyte to expand and contract to fall away from the electrode surface. This process physically removes the gas generated on the electrode surface to reduce the concentration of gas within the battery.

Step 630 is a third step that represents a process in which the gas bubbles separated by ultrasonic waves are moved through the electrolyte and discharged out of the battery. The energy of ultrasonic vibrations moves the gas bubbles out of the battery, which causes the gas within the battery to be rapidly removed. When the removal of gas is completed, the concentration of gas within the battery is decreased and the active area of the electrode surface is maintained to improve the performance of the battery.

This process of gas removal using ultrasonic waves minimizes side reactions that occur during the activation process of the battery, and significantly improves the charge/discharge performance of the battery by maintaining the active area of the electrode. It also contributes to reducing the internal resistance of the battery to improve the charge efficiency thereof and to extending the life of the battery. The ultrasonic vibration unit of the present invention removes the gas generated inside the lithium-ion battery through this process, thereby preventing a deterioration in performance of the battery and enabling stable battery operation.

In the present invention, the ultrasonic vibration unit is operated in relation to the control unit. The control unit monitors the concentration of gas within the battery in real time, and activates the ultrasonic vibration unit to automatically run the gas removal process when the concentration of gas is equal to or greater than a specific threshold. The control unit optimizes the frequency, output, and operating time of the ultrasonic vibration unit based on the data received from the gas sensor unit to efficiently remove gas. This automated control contributes to saving energy in the manufacturing process of the battery and to maximizing battery performance by applying ultrasonic vibrations only when needed.

The system for removing lithium-ion battery gas of the present invention described with reference to FIGS. 6A and 6B can effectively remove the gas generated during the manufacturing process of the lithium-ion battery, thereby improving the performance and safety of the battery. In particular, the method of gas removal using the multilayered tray structure and the ultrasonic vibration unit can process a large number of batteries at once, greatly increasing the efficiency of the manufacturing process. This configuration plays an important role in maximizing the efficiency of gas removal within the battery and in extending the life of the battery and improving its performance.

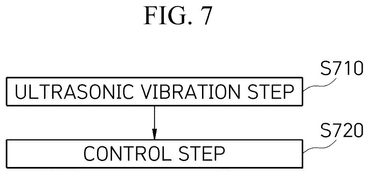

FIG. 7 is a flowchart for explaining a method of removing lithium-ion battery gas according to embodiments of the present invention.

FIG. 7 is a flowchart for explaining the method of removing lithium-ion battery gas of the present invention and illustrates step-by-step a series of processes for removing gas using ultrasonic waves and controlling the same. The invention of this method aims to effectively remove the gas generated during an activation process of a lithium-ion battery to prevent a deterioration in performance of the battery and to optimize the charge/discharge performance of the battery. The steps in FIG. 7 include an ultrasonic vibration step S710 and a control step S720, which describes how to effectively remove the gas within the battery.

The ultrasonic vibration step S710 as a first step performs a process of applying ultrasonic waves during the activation process of the lithium-ion battery to remove the gas within the battery. An ultrasonic vibration unit 110 is installed on the underside and side of the lithium-ion battery to transmit ultrasonic waves through the electrolyte within the battery. Ultrasonic waves help to expand and contract gas bubbles that exist between the electrolyte and the electrode in the battery to separate the gas bubbles from the surface of the electrode.

The frequency of the ultrasonic waves is set between 20 kHz and 20 MHz, providing energy suitable for removing the gas within the battery. Ultrasonic vibrations physically remove the gas from the electrode surface, thereby maintaining the active area of the electrode and reducing the internal resistance of the battery. The ultrasonic vibration step plays an important role in removing the gas adsorbed on the electrode surface to prevent a degradation in performance of the battery and increase the charge/discharge efficiency thereof.

The control step S720 as a second step includes a process of controlling the operation of the ultrasonic vibration unit.

A control unit monitors the concentration of gas within the lithium-ion battery in real time, and activates the ultrasonic vibration unit or adjusts and optimizes the operation thereof when the concentration of gas is equal to or greater than a specific threshold. In this step, the concentration of gas within the battery is measured by a gas sensor unit, and if the concentration of gas exceeds a certain level, the frequency, output, and operating time of the ultrasonic vibration unit are adjusted to remove gas.

By controlling the operation of the ultrasonic vibration unit in the control step, it is possible to save energy and maintain optimal conditions for effectively removing the gas inside the battery. The control unit ensures thermal stability of the battery and maximizes the efficiency of gas removal by adjusting ultrasonic vibrations so as not to have excessive effects on the battery.

The method of removing lithium-ion battery gas of the present invention as illustrated in FIG. 7 includes a step S710 of using ultrasonic waves to remove the gas generated during the activation process of the lithium-ion battery, and a control step S720 to optimize this process. By applying ultrasonic waves to remove the gas present on the electrode surface, it is possible to reduce the internal resistance of the battery and increase the charge efficiency and discharge stability thereof. In addition, by controlling the operation of the ultrasonic vibration unit in the control step, it is possible to save energy and maximize the efficiency of gas removal simultaneously.

This method of gas removal using ultrasonic waves is very effective in maintaining the performance of the battery and extending the life thereof. By quickly removing the gas generated by side reactions that occur during the activation process of the battery, the active area of the electrode is maintained and the internal resistance of the battery is lowered, thereby improving the charge/discharge performance of the battery. In addition, since a large number of batteries are processed simultaneously during the manufacturing process of the battery, the efficiency of the manufacturing process can be greatly increased.

The steps described with reference to FIG. 7 clearly explain how the method of the present invention is applied to the activation process of the lithium-ion battery and how it is performed, which contributes to optimizing the performance of the battery and making the manufacturing process efficient. In this way, the method of removing lithium-ion battery gas of the present invention can be utilized as an important technology for increasing the long-term stability and reliability of the lithium-ion battery.

As is apparent from the herein description, since the present invention provides the system and method of gas removal using ultrasonic waves, which effectively remove the gas generated during the activation process of the lithium-ion battery, it is possible to prevent a deterioration in performance of the battery and ensure the long-term stability thereof. By rapidly separating and discharging the gas adsorbed on the electrode surface using the ultrasonic vibrators, it is possible to reduce the internal resistance of the battery and significantly improve the charge/discharge efficiency thereof. In addition, by optimizing the operation of the ultrasonic vibrators in conjunction with the control unit and the gas sensor unit, it is possible to reduce energy consumption and maximize battery performance.

Furthermore, the system for removing lithium-ion battery gas of the present invention can improve the productivity of the manufacturing process by providing a structure capable of processing a plurality of lithium-ion batteries simultaneously. By processing a large number of batteries at once using the multilayered tray structure and the multiple ultrasonic vibrators, it is possible to remove the gas generated during the activation process and reduce manufacturing costs. As a result, the present invention can contribute to extending the life of the lithium-ion battery and increasing the reliability and safety of the battery to maximize the usability of the battery in various applications. However, aspects and features of the present invention are not limited to those described herein, and other aspects and features not mentioned will be clearly understood by a person skilled in the art from the detailed description, described herein.

Hereinafter, materials which may be used in a secondary battery according to embodiments of the present invention are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}Dₑ (0. 90≤a≤1.8, 0≤b≤0.5, 0≤c≤0.05); LiₐMn_{2-b}X_{b}O_{4-c}D_{c} (0. 90≤a≤1.8, 0≤b≤0.5, 0≤c≤0.05) ; LiₐNi_{1-b-c}Co_{b}X_{c}O_{2-α}D_{α} (0. 90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2) ; LiₐNi_{b}Co_{c}L¹_{d}GₑO₂ (0.90≤a≤1.8, 0≤b≤0.9, 0≤c≤0.5, 0≤d≤0.5, 0≤e≤0.1) ; LiₐNiG_{b}O₂ (0.90≤a≤1.8, 0.001≤b≤0.1) ; LiₐCoG_{d}O₂ (0. 90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0. 90≤a≤1.8, 0≤g≤0.5); Li_{(3-f)}Fe₂(PO₄)₃(0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to the positive electrode active material layer 100 wt.%. Content of the binder and the conductive material may be 0.5 wt.% to 5 wt.% with respect to the positive electrode active material layer 100 wt.%.

Al may be used as the current collector, but the present invention may not be limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/deintercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include the negative electrode active material of 90 wt.% to 99 wt.%, the binder of 0.5 wt.% to 5 wt.%, and the conductive material of 0 wt.% to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may play a role as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present invention is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present invention has been described herein in connection with the limited embodiments and drawings, the present invention is not limited to embodiments. A person having ordinary knowledge in the art to which the present invention pertains may modify and change the present invention within the technical spirit of the present invention and the equivalent range of the following claims.

## Claims

1. An apparatus (100) for removing lithium-ion battery gas, which is used to remove gas generated during an activation process of a lithium-ion battery (200), the apparatus (100) comprising:
an ultrasonic vibration unit (110) configured to apply ultrasonic waves to the lithium-ion battery (200) to remove gas within the battery; and
a control unit (130) configured to control an operation of the ultrasonic vibration unit (110).

2. The apparatus (100) as claimed in claim 1, wherein the ultrasonic vibration unit (110) is installed on at least one of an underside and side of the lithium-ion battery (200) to transmit ultrasonic vibrations through an electrolyte of the lithium-ion battery (200), optionally wherein the ultrasonic vibration unit (110) has a frequency range of 20 kHz to 20 MHz and an oscillation output set between 50 W and 1800 W to provide vibration energy required for removing gas generated during the activation process.

3. The apparatus (100) as claimed in claim 1 or 2, further comprising a tray structure (120) placed between the lithium-ion battery (200) and the ultrasonic vibration unit (110)located therebeneath,
wherein the tray structure (120) supports an underside of the lithium-ion battery (200) and transmits ultrasonic waves to remove gas within the lithium-ion battery (200), optionally wherein the tray structure (120) is able to support a plurality of lithium-ion batteries (200) simultaneously and transmits ultrasonic waves to the plurality of lithium-ion batteries (200) to remove gas simultaneously.

4. The apparatus (100) as claimed in any one of the preceding claims, wherein the ultrasonic vibration unit (110) is placed on a side of the lithium-ion battery (200) and applies ultrasonic waves to 80% of the area of the side to remove gas trapped on the side of the battery during the activation process.

5. The apparatus (100) as claimed in any one of the preceding claims, wherein the control unit (130) controls the operation of the ultrasonic vibration unit (110) to function to remove gas generated inside the lithium-ion battery (200).

6. A method of removing lithium-ion battery gas, which is used to remove gas generated during an activation process of a lithium-ion battery (200), the method comprising:
applying ultrasonic waves to the lithium-ion battery (200) to remove gas within the battery by an ultrasonic vibration unit (110); and
controlling an operation of the ultrasonic vibration unit (110) by a control unit (130).

7. The method as claimed in claim 6, wherein the applying ultrasonic waves to the lithium-ion battery (200) comprises transmitting ultrasonic vibrations through an electrolyte of the lithium-ion battery (200) by the ultrasonic vibration unit (110) installed on at least one of an underside and a side of the lithium-ion battery (200), optionally wherein the applying ultrasonic waves to the lithium-ion battery (200) comprises providing vibration energy required for removing gas generated during the activation process at a frequency range of 20 kHz to 20 MHz and an oscillation output set between 50 W and 1800 W.

8. The method as claimed in claim 6 or 7, further comprising placing a tray structure (120) between the lithium-ion battery (200) and the ultrasonic vibration unit (110) located therebeneath,
wherein in the placing a tray structure (120), the tray structure (120) supports an underside of the lithium-ion battery (200) to transmit ultrasonic waves, optionally wherein in the placing a tray structure (120), the tray structure (120) is able to support a plurality of lithium-ion batteries (200) simultaneously and transmits ultrasonic waves to the plurality of lithium-ion batteries (200) to remove gas simultaneously.

9. The method as claimed in any of the claims 6 to 8, wherein the applying ultrasonic waves to the lithium-ion battery (200) comprises removing gas trapped on a side of the battery during the activation process by the ultrasonic vibration unit (110) placed on the side of the battery and configured to apply ultrasonic waves to 80% of the area of the side.

10. The method as claimed in any of the claims 6 to 9, wherein the controlling an operation of the ultrasonic vibration unit (110) comprises:
optimizing the gas removal by adjusting a frequency, output, and operating time of the ultrasonic vibration unit (110); and
controlling the ultrasonic vibration unit (110) that monitors a concentration of gas within the lithium-ion battery (200) in real time by a gas sensor unit and either activates or stops the operation of the ultrasonic vibration unit (110) when the concentration of gas is equal to or greater than a specific threshold.

11. A system for removing lithium-ion battery gas, which is used to remove gas generated during an activation process of a lithium-ion battery (200) and improve performance of the battery, the system comprising:
an ultrasonic vibration unit (110) configured to apply ultrasonic waves into the lithium-ion battery (200) for removal of gas;
a control unit (130) configured to control an operation of the ultrasonic vibration unit (110); and
a gas sensor unit configured to monitor gas concentration data within the lithium-ion battery (200) in real time.

12. The system as claimed in claim 11, wherein the ultrasonic vibration unit is installed on at least one of an underside and a side of the lithium-ion battery to transmit ultrasonic waves for the gas removal.

13. The system as claimed in claim 11 or 12, wherein the control unit (130) optimizes the gas removal by adjusting a frequency, output, and operating time of the ultrasonic vibration unit (110) based on the gas concentration data received from the gas sensor unit.

14. The system as claimed in any of the claims 11 to 13, wherein the gas sensor unit measures a concentration of gas within the lithium-ion battery (200) in real time, and sends a signal to the control unit (130) to activate the ultrasonic vibration unit (110) when the concentration of gas is equal to or greater than a specific threshold.

15. The system as claimed in any of the claims 11 to 14, wherein the system transmits ultrasonic waves simultaneously to a plurality of lithium-ion batteries (200) to remove gas generated inside the individual batteries, optionally wherein the ultrasonic vibration unit (110) provides vibration energy at an ultrasonic oscillation output set between 50 W and 1800 W.
